(19) Europäisches Patentamt
European Patent Office
Office européen des brevets

(11) **EP 3 499 890 A1**

(12) **EUROPEAN PATENT APPLICATION**

(43) Date of publication:
19.06.2019 Bulletin 2019/25

(51) Int Cl.:
*H04N 19/176* (2014.01)  *H04N 19/119* (2014.01)
*G06T 9/00* (2006.01)

(21) Application number: 17306773.7

(22) Date of filing: 14.12.2017

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
MA MD TN

(71) Applicant: THOMSON LICENSING
92130 Issy les Moulineaux (FR)

(72) Inventors:
• LELEANNEC, Fabrice
35576 Cesson-Sévigné (FR)

• GALPIN, Franck
35576 Cesson-Sévigné (FR)
• RACAPE, Fabien
35576 Cesson-Sévigné (FR)
• JAISWAL, Sunil
35576 Cesson-Sévigné (FR)

(74) Representative: Huchet, Anne et al
InterDigital CE Patent Holdings
20, rue Rouget de Lisle
92130 Issy-les-Moulineaux (FR)

(54) **DEEP LEARNING BASED IMAGE PARTITIONING FOR VIDEO COMPRESSION**

(57) A block of video data is split using one or more of several possible partition operations by using the partitioning choices obtained through use of a deep learning-based image partitioning. In at least one embodiment, the block is split in one or more splitting operations using a convolutional neural network. In another embodiment, inputs to the convolutional neural network come from pixels along the block's causal borders. In another embodiment, boundary information, such as the location of partitions in spatially neighboring blocks, is used by the convolutional neural network. Methods, apparatus, and signal embodiments are provided for encoding.

No split  QT split  BL split  BR split

BV split  BH split  BT split  BB split

Figure 21

**Description**

FIELD OF THE INVENTION

The present principles relate to the field of video compression.

BACKGROUND OF THE INVENTION

In the HEVC video compression standard (International Telecommunication Union, ITU-T H.265 High Efficiency Video Coding), a picture is divided into so-called Coding Tree Units (CTU), whose size is typically 64x64, 128x128, or 256x256 pixels.

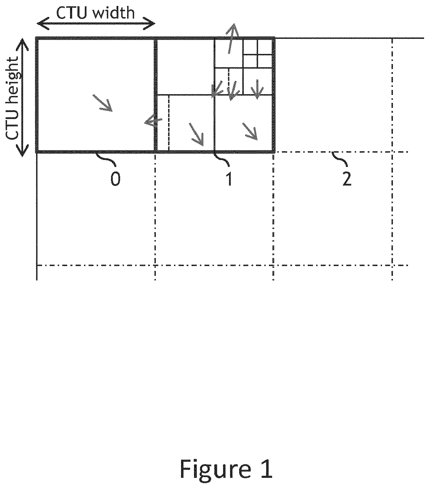

Each CTU is represented by a Coding Tree in the compressed domain. This is a quad-tree division of the CTU, where each leaf is called a Coding Unit (CU), as shown in Figure 1.

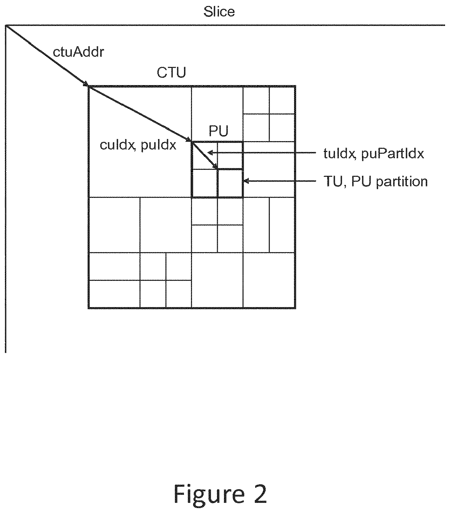

Each CU is then given some Intra or Inter prediction parameters (Prediction Info). To do so, it is spatially partitioned into one or more Prediction Units (PUs), each PU being assigned some prediction information. The Intra or Inter coding mode is assigned on the CU level, see Figure 2.

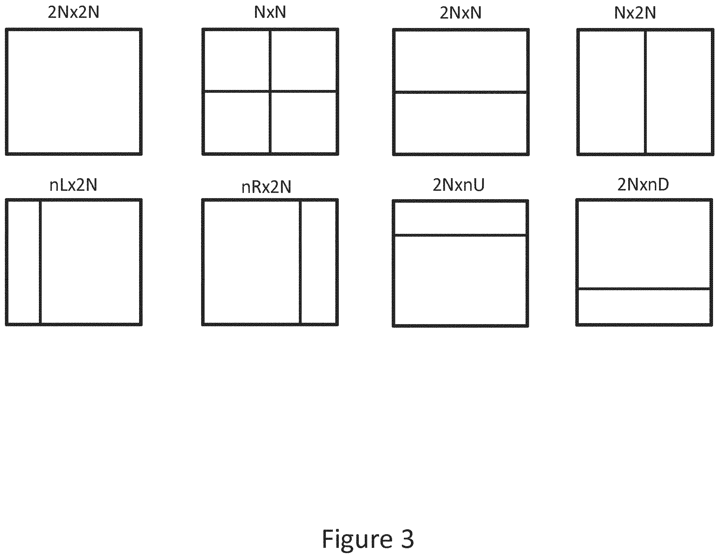

The Partitioning of a Coding Unit into Prediction Unit(s) is done according to the partition type, signaled in the bit-stream. For Intra coding unit, only the partition types 2Nx2N and NxN, illustrated in Figure 3, are used. This means only square Prediction Units are used in Intra Coding Units.

On the contrary, Inter Coding Units can use all partition types shown in Figure 3.

According to the HEVC standard, Coding Units are also divided into so-called transform units, in a recursive way, following a "transform tree". Thus, a transform tree is a quad-tree division of a coding unit, and transform units are the leaf of the transform tree. A transform unit encapsulates the square transform blocks of each picture component corresponding to a considered square spatial area. A transform block is a square block of samples in a single component, where the same transform is applied.

New emerging video compression tools include a Coding Tree Unit representation in the compressed domain, proposed in order to represent picture data in a more flexible way in the compressed domain. The advantage of this flexible representation of the coding tree is that it provides increased compression efficiency compared to the CU/PU/TU arrangement of the HEVC standard.

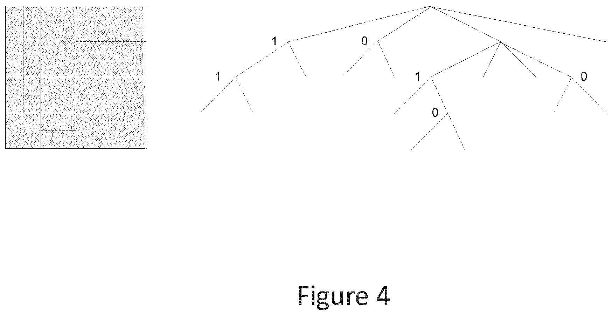

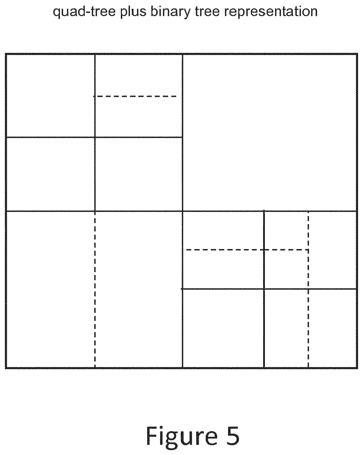

The Quad-Tree plus Binary-Tree (QTBT) coding tool provides this increased flexibility. It consists in a coding tree where coding units can be split both in a quad-tree and in a binary-tree fashion. Such coding tree representation of a Coding Tree Unit is illustrated in Figure 4. The QTBT representation on a block is illustrated in Figure 5.

The splitting of a coding unit is decided on the encoder side through a rate distortion optimization procedure which consists in determining the QTBT representation of the CTU with minimal rate distortion cost.

In the QTBT technology, a CU has either square or rectangular shape. The size of coding unit is always a power of 2, and typically goes from 4 to 256.

In addition to this variety of rectangular shapes for a coding unit, this new CTU representation has the following different characteristics compared to HEVC.

First, the QTBT decomposition of a CTU is made of two stages: first the CTU is split in a quad-tree fashion, then each quad-tree leaf can be further divide in a binary fashion. This is illustrated on the right of Figure 4 where solid lines represent the quad-tree decomposition phase and dashed lines represent the binary decomposition that is spatially embedded in the quad-tree leaves.

Second, in intra slices, the Luma and Chroma block partitioning structure is separated, and decided independently.

Next, no more CU partitioning into predictions units or transform units is employed. In other words, each Coding Unit is systematically made of a single prediction unit (previously 2Nx2N prediction unit partition type) and single transform unit (no division into a transform tree).

However, further improved compression efficiency is needed for QTBT technology.

SUMMARY OF THE INVENTION

These and other drawbacks and disadvantages of the prior art are addressed by at least one of the described embodiments, which are directed to a method and apparatus for coding or decoding a block of video data. In at least one embodiment, it is proposed to use a convolutional neural network to generate a vector of split partition probabilities.

According to at least one general embodiment described herein, there is provided a method for coding a block of video data. The method comprises generating a vector of split possibilities using a convolutional neural network from a block of image data comprising pixels and from additional pixels; partitioning said block of image data into one or more smaller blocks using said vector of split possibilities; and, encoding said one or more smaller blocks.

According to another general embodiment described herein, there is provided an apparatus for coding a block of video data. The apparatus comprises a memory, and a processor, configured to generate a vector of split possibilities using a convolutional neural network from a block of image data comprising pixels and from additional pixels; partition said block of image data into one or more partitions using said vector of split possibilities; and, encode said one or more partitions.

According to another aspect described herein, there is provided a nontransitory computer readable storage medium containing data content generated according to the method of any one of the described method embodiments, or by the apparatus of any one of the described apparatus embodiments for playback using a processor.

According to another aspect described herein, there is provided a signal comprising video data generated according to the method of any one of the described method embodiments for coding a block of video data, or by the apparatus of any one of the described apparatus embodiments for coding a block of video data, for playback using a processor.

According to another aspect described herein, there is provided a computer program product comprising instructions which, when the program is executed by a computer, cause the computer to carry out the method of any one of the described method embodiments.

These and other aspects, features and advantages of the present principles will become apparent from the following detailed description of exemplary embodiments, which is to be read in connection with the accompanying drawings.

BRIEF DESCRIPTION OF THE DRAWINGS

Figure 1 illustrates one example of a coding tree unit and coding tree concepts to represent a compressed picture.

Figure 2 illustrates an example of the division of a coding tree unit into coding units, prediction units and transform units.

Figure 3 illustrates an example of partitioning of coding units.

Figure 4 illustrates an example quad-tree plus binary-tree coding tree unit representation.

Figure 5 illustrates one embodiment of a the Quad Tree plus Binary Tree representation on a coding block.

Figure 6 illustrates triple mode splitting of a block.

Figure 7 illustrates different splits of a block to handle a block non-uniformity.

Figure 8 illustrates the set of all Coding Unit spitting modes supported in the video coding scheme herein described.

Figure 9 illustrates a standard, generic video compression scheme.

Figure 10 illustrates an embodiment for training a CNN (Convolutional Neural Network).

Figure 11 illustrates inputs of a CNN.

Figure 12 illustrates boundary information as a secondary input channel.

Figure 13 illustrates a classical design for a CNN.

Figure 14 illustrates neighbors split input.

Figure 15 illustrates neighbors split as vectors.

Figure 16 illustrates neighbors split input as a residual.

Figure 17 illustrates reduced neighbors splits information.

mation.

Figure 18 illustrates resulting vector of boundaries.

Figure 19 illustrates a quadtree (QT) split vector.

Figure 20 illustrates quadtree (QT), binary vertical (BV), binary horizontal (BH) splits vector construction.

Figure 21 illustrates Quadtree (QT), binary vertical (BV), binary horizontal (BH), asymmetric binary top (BT), asymmetric binary bottom (BB), asymmetric binary left (BL) and asymmetric binary right (BR) splits vector construction.

Figure 22 illustrates an example of component weighting for a QTBT policy.

Figure 23 illustrates one embodiment of a method using the described aspects.

Figure 24 illustrates one embodiment of an apparatus using the described aspects.

DETAILED DESCRIPTION

An approach is described for improved entropy coding efficiency of transform coefficients in coding units, providing good compression and minimal increase in coder design complexity.

For clarity, in this description, "dividing", "segmenting" and "splitting" all mean the same thing, which is the act of performing a straight-line division of a block of pixels. Similarly, "splits", and "divisions" mean the same thing, a grouping of pixels as a result of dividing, splitting or segmenting a block or a sub-block.

In the HEVC video compression standard, a picture is divided into so-called Coding Tree Units (CTU), with typical sizes of 64x64, 128x128, or 256x256 pixels.

Each CTU is represented by a Coding Tree in the compressed domain. This is a quad-tree division of the CTU, where each leaf is called a Coding Unit (CU), see Figure 1.

Each CU is then given some Intra or Inter prediction parameters (Prediction Info). To do so, it is spatially partitioned into one or more Prediction Units (PUs), each PU being assigned some prediction information. The Intra or Inter coding mode is assigned on the CU level, see Figure 2.

The Partitioning of a Coding Unit into Prediction Unit(s) is done according to the partition type, signaled in the bit-stream. For Intra coding unit, only the partition types 2Nx2N and NxN, illustrated in Figure 3 are used in HEVC. This means only square Prediction Units are used in Intra Coding Units.

On the contrary, Inter Coding Units can use all partition types shown in Figure 3.

According to the HEVC standard, Coding Units are also divided into so-called transform units, in a recursive way, following a "transform tree". Thus, a transform tree is a quad-tree division of a coding unit, and transform units are the leaf of the transform tree. A transform unit encapsulates the square transform blocks of each picture component corresponding to a considered square spatial area. A transform block is a square block of samples in a single component, where the same transform is applied.

New emerging video compression tools include a Coding Tree Unit representation in the compressed domain in order to represent picture data in a more flexible way in the compressed domain. The advantage of this flexible representation of the coding tree is that it provides increased compression efficiency compared to the CU/PU/TU arrangement of the HEVC standard.

The Quad-Tree plus Binary-Tree (QTBT) coding tool provides this increased flexibility. It consists in a coding tree where coding units can be split both in a quad-tree (4 sub-units) and in a binary-tree (2 sub-units) fashion. Such coding tree representation of a Coding Tree Unit is illustrated in Figure 4.

The splitting of a coding unit is decided on the encoder side through a rate distortion optimization procedure, which consists in determining the QTBT representation of the CTU with minimal rate distortion cost.

In the QTBT technology, a CU has either square or rectangular shape. The size of coding unit is usually a power of 2, and typically goes from 4 to 256.

In addition to this variety of rectangular shapes for a coding unit, this new CTU representation has the following different characteristics compared to HEVC.

First, the QTBT decomposition of a CTU is made of two stages: first the CTU is split in a quad-tree fashion, then each quad-tree leaf can be further divided in a binary fashion. This is illustrated on the right of Figure 4 where solid lines represent the quad-tree decomposition phase and dashed lines represent the binary decomposition that is spatially embedded in the quad-tree leaves.

Next, in intra slices, the luma and chroma block partitioning structure is separated, and decided independently.

Further, no more CU partitioning into predictions units or transform units is employed. In other words, each Coding Unit is systematically made of a single prediction unit (previously 2Nx2N prediction unit partition type) and single transform unit (no division into a transform tree).

The described embodiments concern the domain of picture coding unit representation in compression and aims at further improved compression efficiency.

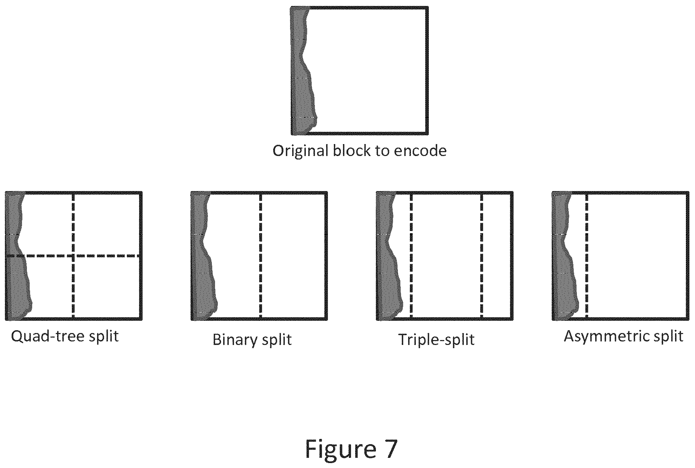

Triple trees, or triple splits, are splitting of a coding unit or sub-unit into three portions. One of the advantages is that all sub-blocks can be a power of 2. The main drawback is that it does not offer as much flexibility to optimally choose the partitioning of the block as it forces three sub-blocks, even if only two are necessary, for example, when the boundary of an object is passing close to the border (see Figure 7, triple-split vs asymmetric split).

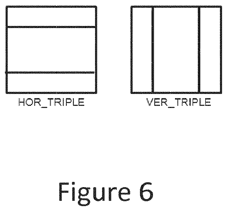

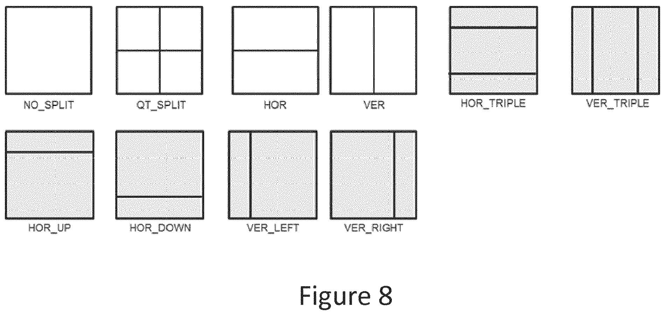

A coding unit splitting mode, called the horizontal or vertical triple tree splitting mode, consists in dividing a coding unit (CU) into 3 sub-coding-units (sub-CUs), with respective sizes equal ¼, ½ and ¼ of the parent CU size in the direction of the considered spatial division. This is illustrated in Figure 6. Figure 8 shows the set of all Coding Unit spitting modes supported in the video coding scheme herein described.

The problem addressed by at least one of the described embodiments is how to improve and/or accelerate the Rate Distortion Optimization (RDO) that is performed at an encoder, which corresponds to the decisions made by the encoder to select the best tools of a standard to compress a given block, macroblock or Coding Tree Unit (CTU). Instead of checking the bitrate/distortion at each block level to find the optimal partitions, a CNN (Convolutional Neural Network) network provides a probability score of each type of possible split into smaller blocks. The computation of this score is very fast since it can be highly parallelizable and can be less complex than a classical RDO operation.

These embodiments are incorporated within the framework of compression of video, specifically at the encoding stage where decisions are made to partition the images of a given input video sequence into blocks. Since H.264/MPEG4-AVC, hybrid codecs have partitioned the images into blocks of different sizes to adapt their compression tools to the textures and objects. In H.265/HEVC for example, the images are first divided into 64x64 non-overlapping Coding Tree Units (CTU), which are then potentially split into smaller Coding Units (CU) down to 8x8 pixels. Although the standards only specify the syntax that signals the sizes of these CU, encoders require an efficient way to choose and optimize the sizes over the images, depending on its ability to compress the different regions. This process is included into the so-called Rate-Distortion Optimization (RDO) that aims at finding the best compromise between a target quality of a reconstructed region and the required bits to be transmitted. Basically, if a CTU contains a signal which is well predicted and reconstructed, there is no need to split it into small blocks, which would result in more syntax. However, when a highly detailed texture is difficult to encode and results in residuals with a high energy, it is relevant to split into small blocks since the price of the syntax is worthwhile compared to the cost reduction of residuals. A full RDO would then consist in evaluating every possible block partitioning of a CTU, which is of huge complexity. A reference software encoder uses a subset of the full RDO, considers only a fixed causal part in the CTU and adds some heuristics but the combinatory remains very high.

Classical encoders start from the evaluation of bigger blocks and take at each level the decision to split into smaller blocks. In the proposed embodiments described herein, deep-learning is used to predict when to split a given block into smaller blocks and how to do so.

To perform RDO with an acceptable complexity, several methods have been implemented in existing codecs.

First, split the search into 2 passes: a first pass performs almost all the prediction modes and splitting options but evaluates the energy of the potential residual with a fast method. Then, the partitioning is fixed, and the second pass precisely evaluates the cost of a subset of best selected modes, transforms or other tools.

In addition, heuristics can be used to avoid less probable partitions, for example by considering the partitioning of previously coded neighboring regions.

The proposed method herein enables much faster selections of partitions while keeping an excellent and driven accuracy.

A prior fast-encoding method involving CNN-based methods for RDO speedup has several limitations. In this method, a convolutional network is used to make decisions on whether to split a given block, within the framework of HEVC.

However, the output of the CNN is a duplet of values that give information on the probabilities of whether to split a current block into 4 smaller quadtree blocks. The embodiments described herein enable the consideration of multiple types of splits: for example, quadtree, binary tree as detailed later.

And, all blocks from 8x8 to 32x32 are first sampled to an 8x8 matrix by averaging, providing an 8x8 matrix as input to the CNN. Although this clearly shows an advantage in terms of implementation, i.e. a unique CNN for all block sizes, it reduces the performances in terms of efficiency to distinguish borders at each level of the partition tree.

The basic idea of the proposed embodiments is use a CNN to improve the Rate Distortion Optimization at the encoder side of existing and future codecs. Specifically, this technique allows a system to compute better decisions of partitioning the images in terms of accuracy and speed.

The embodiments described offer methods that consider the properties of the initial blocks, such as CTUs in HEVC for instance, and provide probabilities of splitting them into smaller shapes.

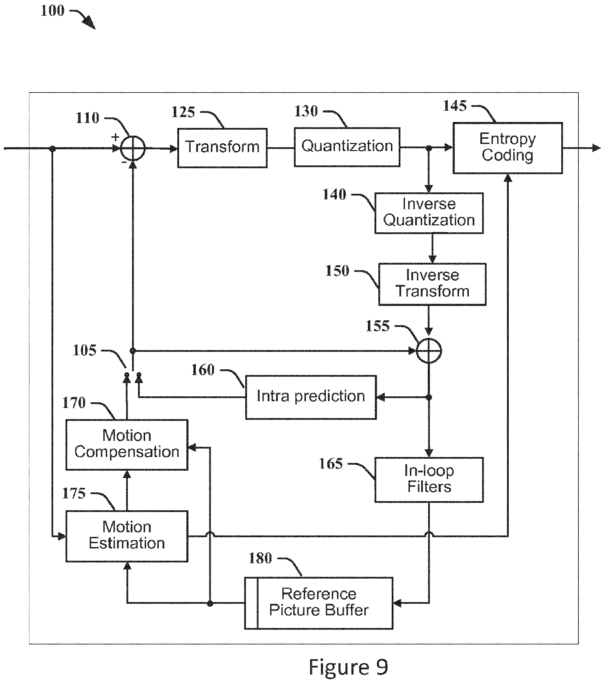

These methods aim at piloting the encoder decisions, and therefore are applicable to encoders and improving the encoding decisions. It is not directly related to one element of Figure 9 since this figure depicts the processing of a given Coding Unit. However, it enables the partitioning of the Coding Tree Units while avoiding several Rate-Distortion checks for some potential blocks and their corresponding complexity, resulting in the entire process described in Figure 9.

The description of the present solution is based on an exemplary version of the reference software designed by the joint Video Exploration Team (JVET) to design the next MPEG/ITU standard for video coding, currently known as H.266.

In this framework, the images are divided into non-overlapping Coding Tree Units (CTUs), like in HEVC. CTUs then correspond to the biggest blocks that can be considered for encoding a given region. In the current version, CTUs' are of size 256X256 pixels. Then, when the texture is difficult to predict and encode on the entire CTU's surface, smaller blocks are considered. This allows choosing different prediction/transform/coding tools per blocks that adapt to the textures. This is at the price of transmitting more syntax elements to describe those choices and block shapes. Hence, Rate Distortion Optimization is performed to select the best modes and the best partition with respect to a given quality and/or bitrate target. There is a balance that needs to be found between the cost of residuals after prediction and transform and the cost of syntax elements that describe the encoding tools. The bigger the blocks on detailed areas, the more energy of the residuals. On the other hand, the smaller the blocks, the costlier the syntax elements.

In HEVC, the structure of block partitions follows a quadtree. So, for each tree depth, the encoder can decide whether to encode directly the current block or split it into four sub-blocks. This is typically done by evaluating the cost of encoding the block at its current size and comparing it to the sum of the 4 costs of the sub-blocks. If, for a given quality, it costs less bits to transmit the syntax for smaller blocks, the encoder proceeds to the evaluation of the next level of depth in the coding tree. This requires trying out the different prediction modes and transforms and other tools of the standard for all the block sizes until the encoder reaches a block size that minimizes the cost, hence the high complexity of encoders compared to decoders.

In the case of H.266 encoders, the complexity is even bigger for multiple reasons:

- Block sizes range up to 256X256
- Different block shapes are considered: square and rectangle blocks
- More prediction tools
- More transforms

As the described embodiments tackle the improvement in choice of block shapes, the following paragraphs will focus on the first two reasons above.

These embodiments propose to use a Convolutional Neural Network CNN-based method to speed-up the process of deciding to split a block or not. Several output decisions of this process occur:

- No split: encode the block at its current size and shape
- Split (quad/binary/...): perform the chosen split and continue with the encoding at the next level of depth.
- No action: let the encoder perform the cost evaluation and make decisions in the classical way.

The next sections detail the CNN architecture, its inputs/outputs, how it is trained and how it is used by the encoder to process the partition tree decisions.

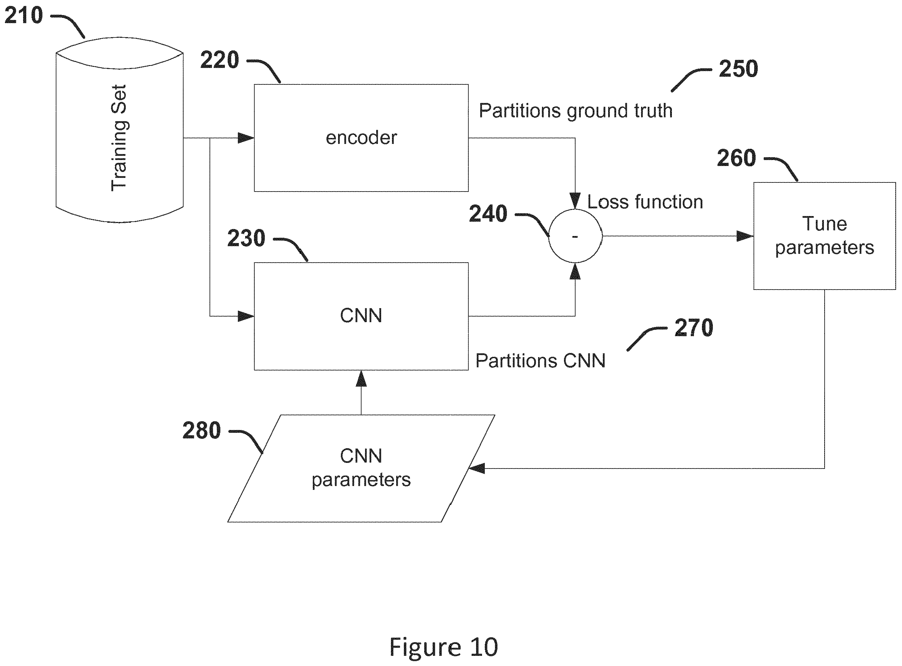

Figure 10 depicts the framework for training the parameters of the CNN.

First, a large dataset of patches 210 (CTU and other information) is collected to build up the training set. The CTUs are gathered within raw sequences. When a CTU is at the border of the image, the missing pixels in the L-shape are assigned a signal median value, for example, 128 for an 8bit sequence or 512 for a 10bit sequence. This corresponds to what is done for intra prediction within the codec. Thus, the CNN will be more accurate on the split probabilities since trained with similar inputs as the classical RDO. The CTUs are classically encoded to derive the ground truth vector of borders that would be chosen by the actual encoder 220. In parallel, the CNN provides a prediction vector of partitions 270 using its current parameters.

The vectors are compared using a loss function 240. For example, the Mean Squared Error is used to evaluate the vectors. This loss is then used to derive/tune new parameters of the CNN through an optimization process 260.

Once this CNN is trained on a very large set of images and its parameters are set, the CNN can be directly used by the encoder.

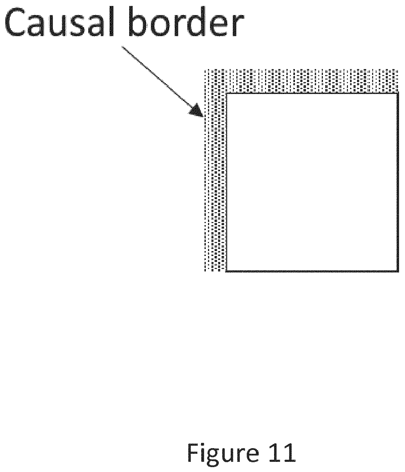

Contrary to a prior solution, the input of the CNN is a block or patch of pixels that correspond to the whole CTU plus the causal L-shape of pixels neighboring the CTU, as depicted in Figure 11. For example, with a CTU of size 64x64, the input patches are then of size (64+N)x(64+N) where N is the size of the causal border. In practice, we choose N=1. The reason to add the border is that the coder itself uses this causal boundary to perform the prediction of the block.

In a first embodiment, the causal border is coming from the original frame. In this case, one advantage is that the CNN processing of each CTU can be done in parallel since it only uses the original frame.

In a second embodiment, the causal border is coming from the decoded neighbors. In this case, one advantage is that the CNN is using the same input as the encoder for the prediction, hence more accurate. However, in this embodiment the processing of each CTU cannot be done in parallel since it uses the decoded frame.

In HEVC or H266, the splits of the Top and Left neighbors have some influence on the coding cost of the splits of the current CTU. For example, in HEVC, the splits flag at each level of the tree are based on a contextual entropy coding depending on the split depth of the neighbors.

To take into account this information in the CNN, a secondary channel (the primary channel of the input being the texture and causal border) can be added.

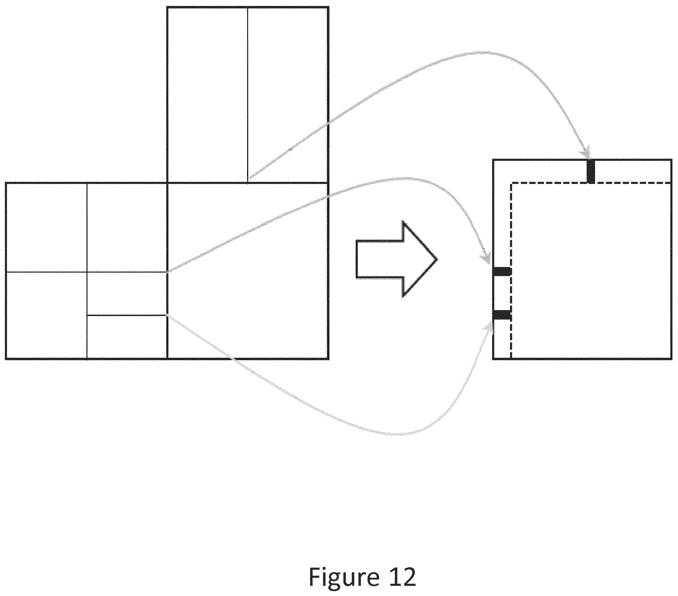

In Figure 12, we show an example where a part of the neighbors split is input as a secondary channel.

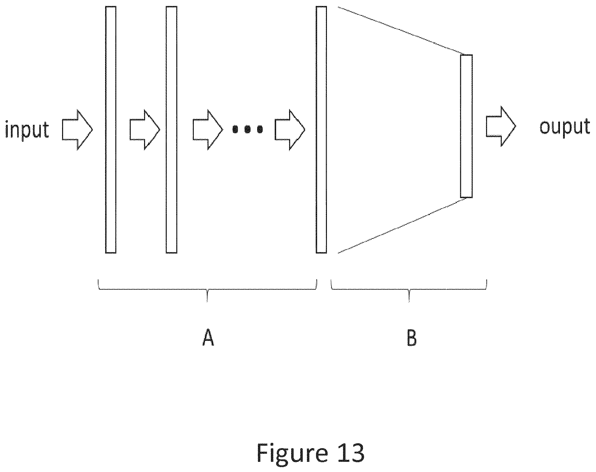

In Figure 13, we show a general design for a Convolutional Neural Network (CNN), where the first part A is composed of convolutional layers, and the part B is composed of Fully Connected (FC) layers which reduce the dimension of the output of part A to the dimension of the output.

Note that part A can contain other types of layers (MaxPool, Addition etc.) and part B can comprise other dimension reducing layers (MaxPool etc.). MaxPool takes a maximum value from each cluster of neurons at a previous layer.

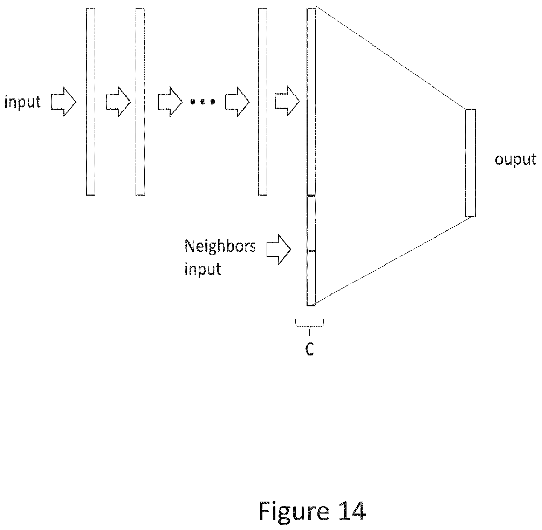

In Figure 14, another way is shown to input neighbor's information. The first part of the network remains unchanged (similar to part A), and the vectors representing the top and left neighbors are concatenated (layer C) to the output of part A (the vector representation is explained in later sections). The remaining portion is then similar to part B, dimension reduction using FC layers or other type of layers.

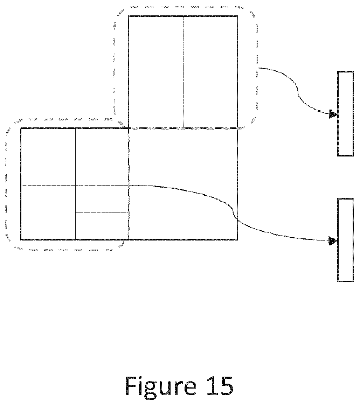

In Figure 15, we show how the neighbors' splits are transformed into an information vector used in layer C of the network in Figure 14. The vector construction is similar to the one for the output.

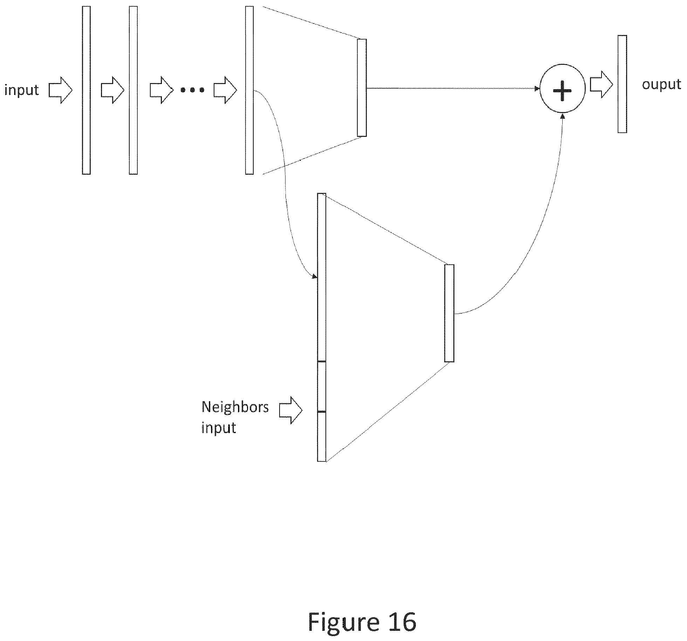

Figure 16 shows an alternative design where the concatenated output of part A and neighbors splits produces a "residual" vector after dimension reduction, which is added to the original vector found using only the texture information.

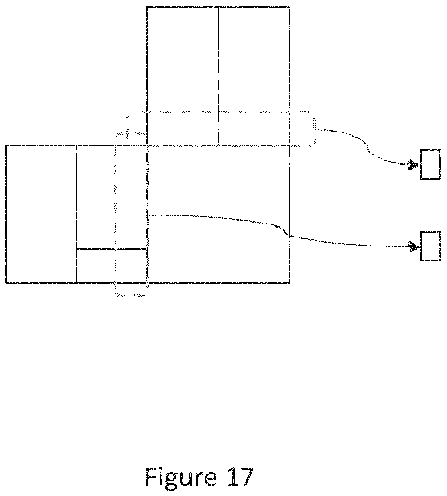

As an alternative, the vectors representing the neighbors' splits can be of reduced dimension. For example, the full vector representing the splits of a 64x64 CU is of dimension 480, as explained shortly. However, using only the splits information close to the border of the current CU would reduce the components to only 15 (see Figure 17).

As the splits results depend a lot on the target QP, one can train a network by QP, or every n QP. Another method is to input the QP as an input channel. In this case, the quantization scale is normalized between 0 and 1 before input. Note that it also allows the setting of a QP by sub-block.

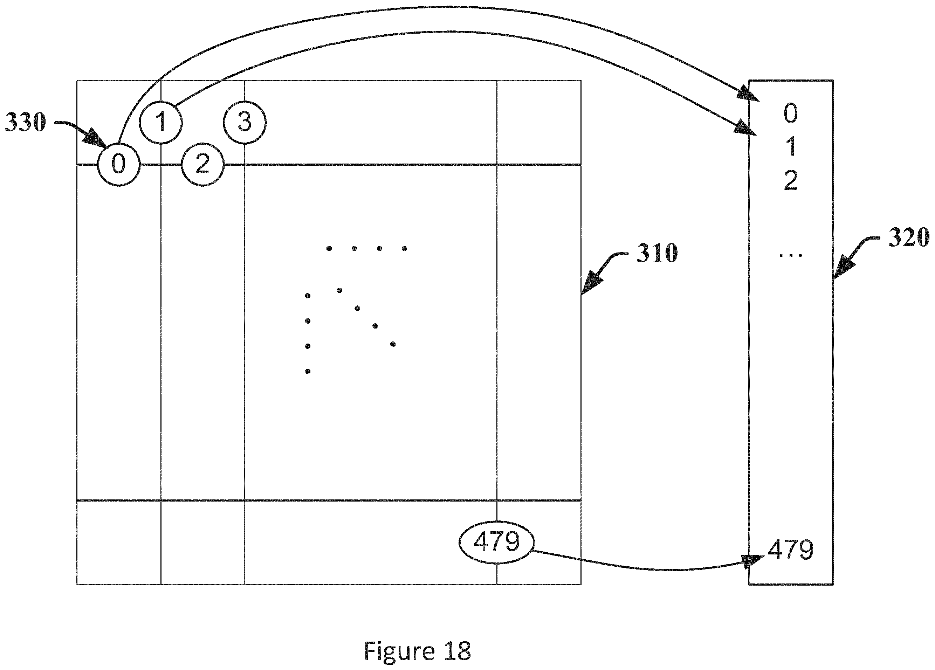

The output of the CNN corresponds to a vector in which each value represents one possible border within a given CTU. In H.266, the minimal block size being 4x4, only pixel borders on a 4x4 grid can be considered for block splits. Hence, for each potential border, the CNN outputs a probability for it to correspond to an actual border between two blocks. For instance, with a CTU size of 64x64, a vector of size 480x1 is considered. Figure 18 depicts an exemplary mapping between potential 4 pixel-long borders in a CTU (310) and their corresponding value in the output vector (320). Each boundary, for example, boundary #0 (330), is assigned an index which can be in a predefined order. In the example shown, the CTU is of size 64x64, which results in a vector of 480 values. More generally, the size of the vector would be $S=2*N*(N-1)$ where $N=W/w$, where W is the CTU size in pixels (for example, W=64) and w is the sub-block size (for example, w=4).

As learning the full splits configuration of a network might be difficult, a system can learn a subset of the splits, considering the recursive evaluation of the splits.

The example here shows only the first level of split is learned for different split policy.

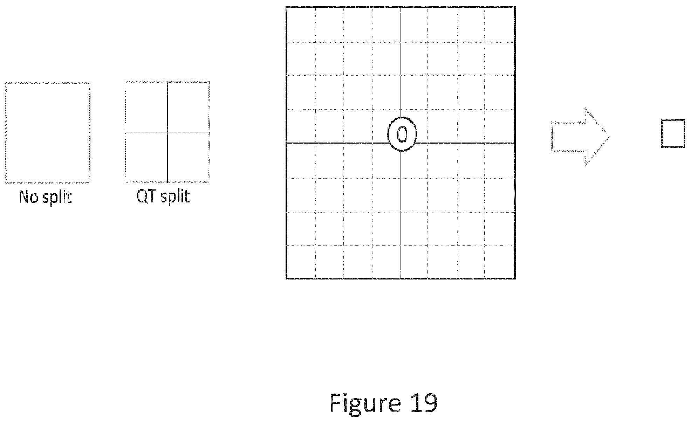

Figure 19 shows an example where only one level of the tree is learned and the only policy for this level is the quadtree split, similar to the HEVC split policy. In this case, the vector of split to learn is reduced to only 1 component.

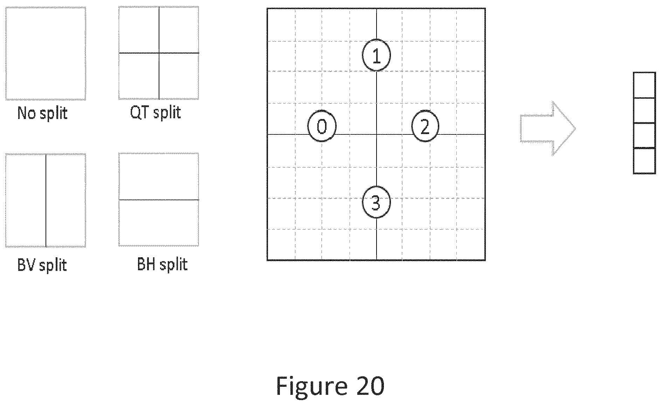

Figure 20 shows how to construct a split vector representing one split depth with a Quadtree (QT) and BinaryTree (BT) policy.

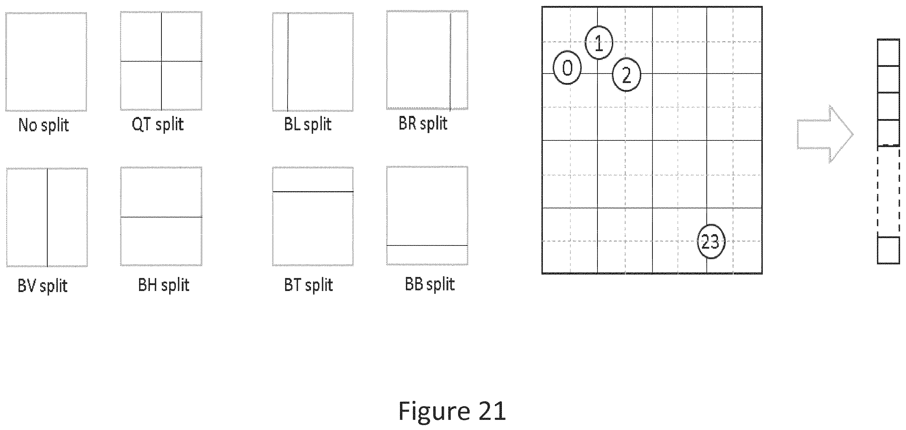

Figure 21 shows how to construct a split vector representing one split depth with a Quadtree (QT) and BinaryTree (BT) and ABT (asymmetric binary tree) policy.

An alternative to learn only one level of split is to put more importance on the prediction of the splits of the first level during the training stage. For this alternative, the full splits vector can be kept but, the loss function is slightly modified to account for the importance of the splits prediction dependence on the level:

$$ L = \sum_i \omega_i \left\| S_i - \widehat{S}_i \right\|^2 $$

where $S_i$ is the ground truth value of a component of the splits vector, $\widehat{S}_i$ the prediction of the same component and $\omega_i$ a weight on the prediction. For example, the weights corresponding to boundaries in Figure 21 can be set to a value $\alpha$ (with $\alpha > 1$), while other components keep a weight of 1.

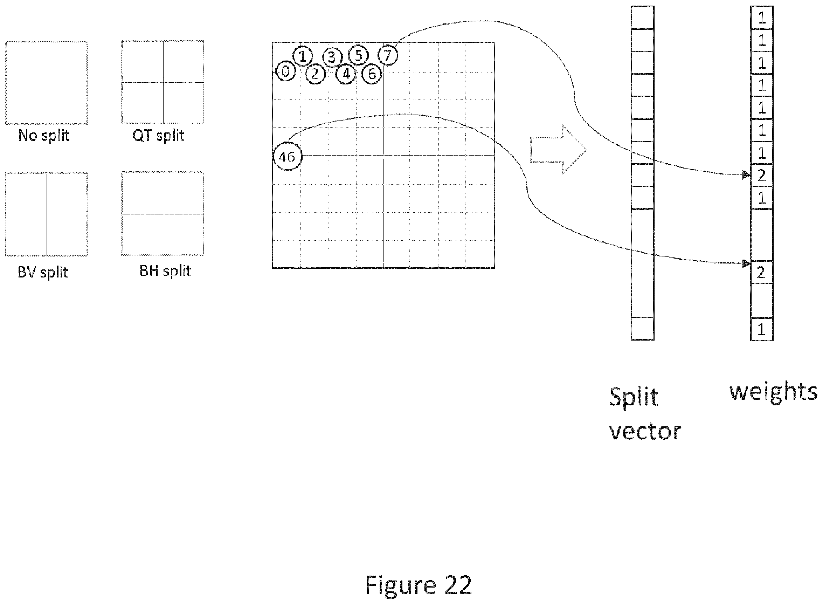

Figure 22 shows an example where boundaries corresponding to the first level of a QTBT split policy have a weight of 2, while the other components keep a weight of 1.

One advantage of the proposed methods is that they can accelerate the decision time for an encoder to determine a partitioning of a block.

The aforementioned embodiments have been described with respect to an encoder or encoding operation. A decoder would simply interpret the splits generated at an encoder using the described embodiments in the same way as splits generated with an RDO process, or any other type of splitting embodiment.

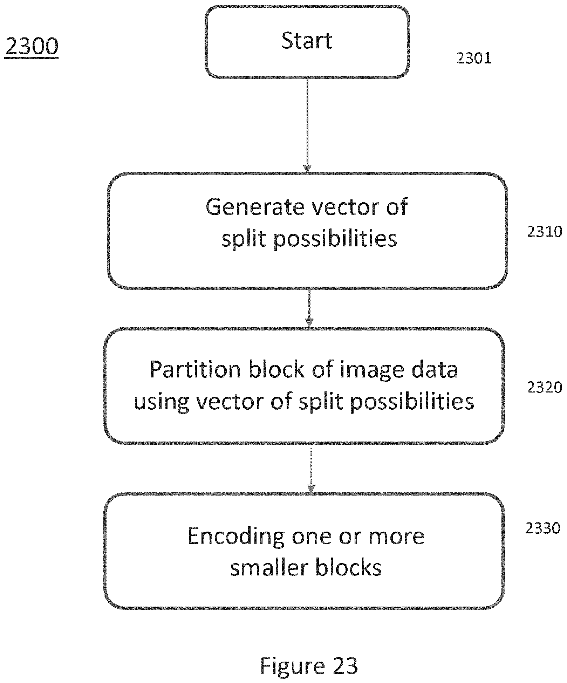

Figure 23 shows one embodiment of a method 2300 for coding a block of video data. The method commences at Start block 2301 and proceeds to block 2310 for generating a vector of split possibilities for a block of image data using pixels of the image. Control proceeds from block 2310 to block 2320 for partitioning a block using the vector of split possibilities. Control proceeds from block 2320 to block 2330 for encoding one or more of the smaller blocks of the block.

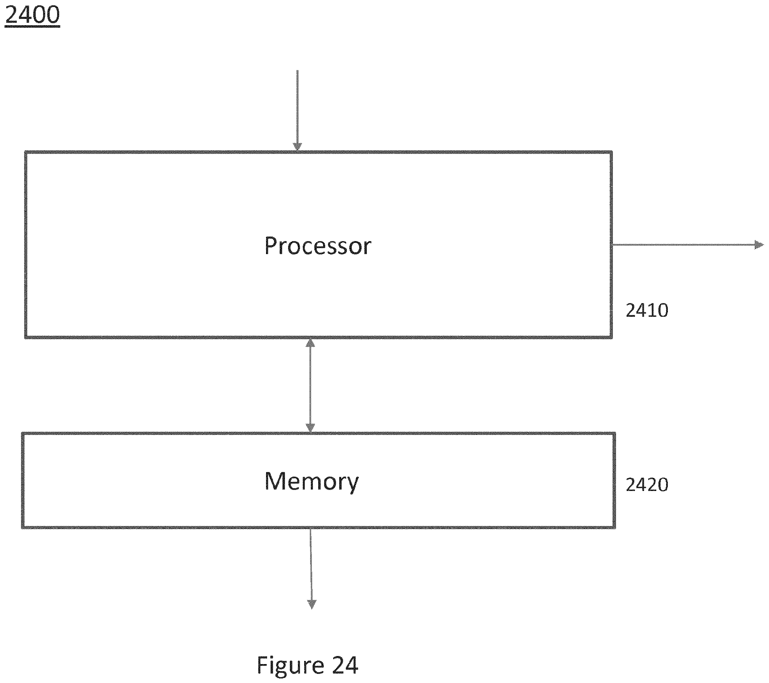

Figure 24 shows one embodiment of an apparatus 2400 for coding or decoding a block of video data. The apparatus comprises Processor 2410 which has input and output ports and is in signal connectivity with Memory 2420, also having input and output ports. The apparatus can execute the aforementioned method embodiment, or any variations thereof.

The functions of the various elements shown in the figures can be provided using dedicated hardware as well as hardware capable of executing software in association with appropriate software. When provided by a processor, the functions can be provided by a single dedicated processor, by a single shared processor, or by a plurality of individual processors, some of which can be shared. Moreover, explicit use of the term "processor" or "controller" should not be construed to refer exclusively to hardware capable of executing software, and can implicitly include, without limitation, digital signal processor ("DSP") hardware, read-only memory ("ROM") for storing software, random access memory ("RAM"), and non-volatile storage.

Other hardware, conventional and/or custom, can also be included. Similarly, any switches shown in the figures are conceptual only. Their function can be carried out through the operation of program logic, through dedicated logic, through the interaction of program control and dedicated logic, or even manually, the particular technique being selectable by the implementer as more specifically understood from the context.

The present description illustrates the present ideas. It will thus be appreciated that those skilled in the art will be able to devise various arrangements that, although not explicitly described or shown herein, embody the present ideas and are included within its scope.

All examples and conditional language recited herein are intended for pedagogical purposes to aid the reader in understanding the present principles and the concepts contributed by the inventor(s) to furthering the art, and are to be construed as being without limitation to such specifically recited examples and conditions.

Moreover, all statements herein reciting principles, aspects, and embodiments of the present principles, as well as specific examples thereof, are intended to encompass both structural and functional equivalents thereof. Additionally, it is intended that such equivalents include both currently known equivalents as well as equivalents developed in the future, i.e., any elements developed that perform the same function, regardless of structure.

Thus, for example, it will be appreciated by those skilled in the art that the block diagrams presented herein represent conceptual views of illustrative circuitry embodying the present principles. Similarly, it will be appreciated that any flow charts, flow diagrams, state transition diagrams, pseudocode, and the like represent various processes which can be substantially represented in computer readable media and so executed by a computer or processor, whether or not such computer or processor is explicitly shown.

In the claims herein, any element expressed as a means for performing a specified function is intended to encompass any way of performing that function including, for example, a) a combination of circuit elements that performs that function or b) software in any form, including, therefore, firmware, microcode or the like, combined with appropriate circuitry for executing that software to perform the function. The present principles as defined by such claims reside in the fact that the functionalities provided by the various recited means are combined and brought together in the manner which the claims call for. It is thus regarded that any means that can provide those functionalities are equivalent to those shown herein.

Reference in the specification to "one embodiment" or "an embodiment" of the present principles, as well as other variations thereof, means that a particular feature, structure, characteristic, and so forth described in connection with the embodiment is included in at least one embodiment of the present principles. Thus, the appearances of the phrase "in one embodiment" or "in an embodiment", as well any other variations, appearing in various places throughout the specification are not necessarily all referring to the same embodiment.

**Claims**

1. A method, comprising:

   generating a vector of split possibilities using a convolutional neural network from a block of image data comprising pixels and from additional pixels;
   partitioning said block of image data into one or more smaller blocks using said vector of split possibilities; and,
   encoding said one or more smaller blocks.

2. An apparatus for coding a block of video data, comprising:

   a memory, and
   a processor, configured to:

      generate a vector of split possibilities using a convolutional neural network from a block of image data comprising pixels and from additional pixels;

      partition said block of image data into one or more smaller blocks using said vector of split possibilities; and,
      encode said one or more smaller blocks.

3. The method of Claim 1 or the apparatus of Claim 2, wherein said additional pixels comprise causal pixels adjacent to said block of image data and from a same image.

4. The method of Claim 1 or the apparatus of Claim 2, wherein said additional pixels comprise causal pixels adjacent to said block of image data and from a reconstructed image.

5. The method of Claim 1 or the apparatus of Claim 2, wherein said convolutional neural network is comprised of convolutional layers and fully connected layers.

6. The method of Claim 1 or the apparatus of Claim 2, wherein information relating to spatial neighboring blocks are concatenated to other inputs to said convolutional neural network.

7. The method of Claim 1 or the apparatus of Claim 2, wherein said convolutional neural network is used for dimension reduction.

8. The method of Claim 1 or the apparatus of Claim 2, wherein said convolutional neural network uses locations of partition boundaries from neighboring blocks.

9. The method or the apparatus of Claim 5, wherein said neighboring blocks are located above and to the left of the current block.

10. The method or the apparatus of Claim 5, wherein information relating to said partition boundaries from neighboring blocks is contained in a vector.

11. The method or the apparatus of Claim 5, wherein output of convolutional layers is concatenated with neighboring block information to produce a residual after dimension reduction that is added to a texture vector.

12. The method or the apparatus of Claim 5, wherein vectors representing neighboring block partition boundary information is reduced in dimension for use in said convolutional neural network.

13. A non-transitory computer readable medium containing data content generated according to the method of any one of claims 1 and 3 to 12, or by the apparatus of any one of claims 2 and 3 to 12, for playback using a processor.

14. A signal comprising video data generated according to the method of any one of claims 1 and 3 to 12, or by the apparatus of any one of claims 2 and 3 to 12, for playback using a processor.

15. A computer program product comprising instructions which, when the program is executed by a computer, cause the computer to decode a stream, generated according to the method of any one of claims 1 and 3 to 12, or by the apparatus of any one of claims 2 and 3 to 12.

Figure 1

Figure 2

Figure 3

Figure 4

quad-tree plus binary tree representation

Figure 5

Figure 6

Original block to encode

Quad-tree split    Binary split    Triple-split    Asymmetric split

Figure 7

Figure 8

Figure 9

Figure 10

Figure 11

Figure 12

Figure 13

Figure 14

Figure 15

Figure 16

Figure 17

Figure 18

Figure 19

Figure 20

Figure 21

No split  QT split

BV split  BH split

Split vector

weights

Figure 22

EP 3 499 890 A1

2300

```
              ┌─────────────────┐
              │      Start       │  2301
              └─────────────────┘
                       │
                       ▼
         ┌───────────────────────────┐
         │      Generate vector of    │  2310
         │      split possibilities   │
         └───────────────────────────┘
                       │
                       ▼
         ┌───────────────────────────┐
         │  Partition block of image  │  2320
         │  data using vector of      │
         │  split possibilities       │
         └───────────────────────────┘
                       │
                       ▼
         ┌───────────────────────────┐
         │   Encoding one or more     │  2330
         │     smaller blocks         │
         └───────────────────────────┘
```

Figure 23

2400

Processor    2410

Memory    2420

Figure 24

Europäisches
Patentamt

European
Patent Office

Office européen
des brevets

# EUROPEAN SEARCH REPORT

Application Number

EP 17 30 6773

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | LIU ZHENYU ET AL: "CU Partition Mode Decision for HEVC Hardwired Intra Encoder Using Convolution Neural Network", IEEE TRANSACTIONS ON IMAGE PROCESSING, IEEE SERVICE CENTER, PISCATAWAY, NJ, US, vol. 25, no. 11, 1 November 2016 (2016-11-01), pages 5088-5103, XP011622937, ISSN: 1057-7149, DOI: 10.1109/TIP.2016.2601264 [retrieved on 2016-09-12] | 1-7, 13-15 | INV. H04N19/176 H04N19/119 G06T9/00 |
| A | * abstract * * figure 3 * * section III "CNN based Fast CU mode decision algorithm" * | 8-12 | |
| A | LI TIANYI ET AL: "A deep convolutional neural network approach for complexity reduction on intra-mode HEVC", 2017 IEEE INTERNATIONAL CONFERENCE ON MULTIMEDIA AND EXPO (ICME), IEEE, 10 July 2017 (2017-07-10), pages 1255-1260, XP033146499, DOI: 10.1109/ICME.2017.8019316 [retrieved on 2017-08-28] * section 3 "Proposed method" * | 1-15 | TECHNICAL FIELDS SEARCHED (IPC) H04N G06T |
| A | JIN ZHIPENG ET AL: "CNN oriented fast QTBT partition algorithm for JVET intra coding", 2017 IEEE VISUAL COMMUNICATIONS AND IMAGE PROCESSING (VCIP), IEEE, 10 December 2017 (2017-12-10), pages 1-4, XP033325745, DOI: 10.1109/VCIP.2017.8305020 [retrieved on 2018-02-28] * the whole document * | 1-15 | |

-/--

The present search report has been drawn up for all claims

| Place of search | Date of completion of the search | Examiner |
|---|---|---|
| The Hague | 5 June 2018 | Stoufs, Maryse |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EUROPEAN SEARCH REPORT**

Application Number

EP 17 30 6773

Europäisches Patentamt
European Patent Office
Office européen des brevets

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | LAUDE THORSTEN ET AL: "Deep learning-based intra prediction mode decision for HEVC", 2016 PICTURE CODING SYMPOSIUM (PCS), IEEE, 4 December 2016 (2016-12-04), pages 1-5, XP033086907, DOI: 10.1109/PCS.2016.7906399 [retrieved on 2017-04-19] * the whole document * | 1-15 | |

TECHNICAL FIELDS SEARCHED (IPC)

The present search report has been drawn up for all claims

| Place of search | Date of completion of the search | Examiner |
|---|---|---|
| The Hague | 5 June 2018 | Stoufs, Maryse |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)